# EUROPEAN PATENT APPLICATION

(11) **EP 1 981 313 A1**
(43) Date of publication of application: **15.10.2008**
(21) Application number: 07425210.7
(22) Date of filing: 13.04.2007
(51) Int. Cl.: H05B 33/08, B60L 1/00, B60Q 11/00, H05B 37/03, H05B 41/285

(54) **Diagnostic system for external lighting devices of a vehicle**

(71) Applicant: Magneti Marelli Sistemi Elettronici S.p.A., 20011 Corbetta (Milano) (IT)
(72) Inventor: Vai, Carlo, 10078 Venaria Reale (Torino) (IT)
(74) Representative: Deambrogi, Edgardo

(57) **Abstract**

Diagnostic system for the external lighting devices of a vehicle, comprising at least one reading circuit (9, 9', ..., 9^{N}), associated with at least one load driver (7, 7', ..., 7^{N}) for sending a pulse width modulated load driving signal (7a, 7a', ..., 7a^{N}) for operating at least one load in the form of an external lighting device (10, 10', 10^{N}) . The reading circuit (9, 9', ..., 9^{N}) can acquire a load signal (7b, 7b', ..., 7b^{N}) correlated with the load driving signal (7a, 7a', ..., 7a^{N}). The system also comprises filtering devices (8, 8', ..., 8^{N}, 8a) designed to receive the load signal (7b, 7b', ..., 7b^{N}) from the reading circuit (9, 9', ..., 9^{N}) and to send at least one output signal related proportionally to the mean value of the load signal (7b, 7b', ..., 7b^{N}). The system also comprises processing means (6, 6a, 6b) comprising at least one comparator module (60, 60a, 60b) which can compare the said at least one output signal with at least one reference threshold, and which is designed to supply a diagnostic result in accordance with the outcome of the said comparison.

## Description

The present invention relates to a diagnostic system for the external lighting of a vehicle.

More specifically, the invention relates to a diagnostic system for a vehicle's external lights which are controlled by the pulse width modulation method.

In the motor vehicle industry, pulse width modulation is increasingly used to control the external lighting devices of vehicles. This method can be used to control the power absorption of an electrical load, for example the lamps or LEDs forming the headlights of a vehicle, by supplying the load with current or voltage in square wave form and varying its duty cycle.

By using pulse width modulation it is possible to supply the load intermittently, with a frequency of intermittency which is high enough to make the end result, as perceived by the user, identical to what would be produced, for example, if the load were supplied with a constant mean current. A lamp or a LED is therefore perceived as if it were constantly on, even if it is actually switched in an intermittent way between the on and the off state.

By using pulse width modulation, therefore, the life of lamps or LEDs can be extended, since they are not overloaded in terms of the mean power absorbed by them. The PWM method can also be used to provide a double function with a single "light point", regardless of whether this is an incandescent lamp or a LED lamp. One example of a double function is a "light point" which provides the more intense "stop light" function when it is driven with a duty cycle close to 100%, while it provides the less intense "marker light" function when driven with a lower duty cycle, for example close to 10% in the case of LEDs or 20-25% in the case of lamps. It must therefore be possible to vary the requisite duty cycle over the whole range of possible values from 0% to 100%.

The driving frequency range used at present in this type of application varies from 80 Hz to 200 Hz for lamps and from 150 Hz to 300 Hz for LEDs, and there is a tendency to increase the frequencies in order to limit or eliminate troublesome visual effects. In the case of LEDs, there are stroboscopic effects, due to the interruption of the luminous flux which occurs when the LED is switched off. In the case of lamps, when the lamp is switched off, it continues to emit light, decreasing its luminous flux until it cools down completely. Since the time intervals between the switching on and off of the lamp are shorter than the time required for cooling, the result is a progressive variation of brightness.

In the motor vehicle industry, it must be possible to carry out a diagnosis or analysis of the correct operation of loads, particularly for external lighting, in order to comply with legal and safety requirements. The use of the pulse width modulation method gives rise to problems and difficulties when this operation is to be carried out.

Current diagnosis is conventionally carried out as described below. The lamps or LEDs are generally connected to the vehicle supply battery by means of a MOS switch, which can measure the current which flows through it and consequently flows through the load. If the measured current is greater than a predetermined threshold value, this means that a destructive short-circuit to ground may have occurred; on the other hand, if the measured current is less than a threshold value, this means that the lamp or LED may have failed. The diagnosis operation can therefore enable a user to recognize malfunctions of the lighting system.

In other cases, the diagnosis can be used to carry out "bulb check" operations consisting in the preventive recognition of the fitted lamp in order to check that the correct lamp has been fitted. For example, a current value below the threshold value means that a lamp designed to absorb a lower power than the desired level may have been fitted.

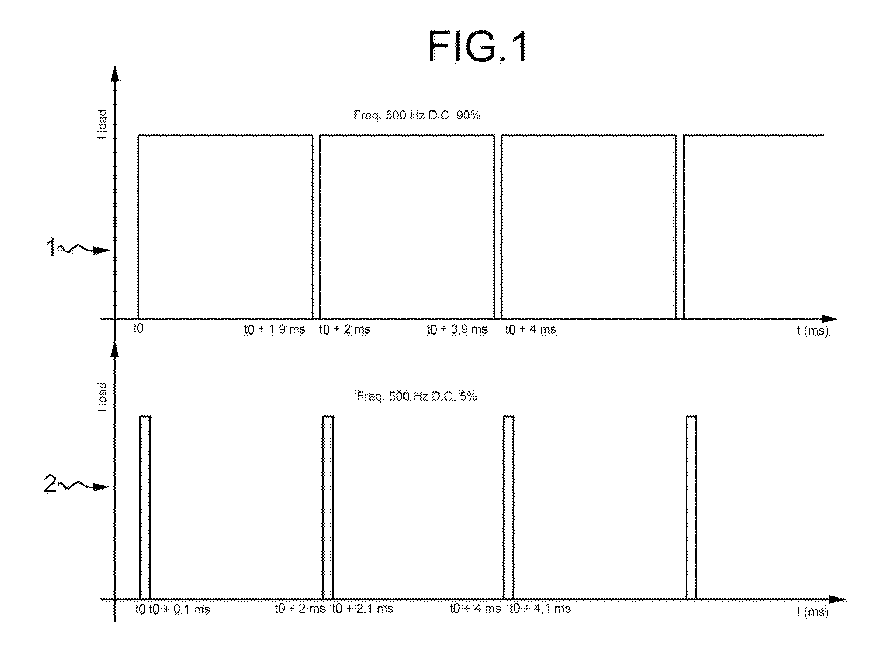

Figure 1 shows an exemplary representation of the current variation in a load, for example a lamp or a LED for the external lighting of a vehicle, as a function of the duty cycle, in a system using a pulse width modulation method of supplying the load. A first diagram 1 and a second diagram 2 are shown in this figure. In the first diagram 1, the variation of the current in the load as a function of time takes the form of a square wave signal having a duty cycle of about 90%; in other words, the square wave has a high value for about 90% of the time and a zero value for 10% of the time. In the second diagram, however, the variation of the current takes the form of a square wave signal having a duty cycle of 5%; in other words, the square wave has a high value for 5% of the time and a zero value for the remaining 95% of the time.

The load therefore acts as if it had a constant mean current flowing through it.

To reduce the effects caused by the flow of large pulsed currents through wires with a length of several metres, it is necessary to avoid driving all the loads, typically numbering 10 to 15, at the same time. It is therefore necessary to generate different pulse width modulation signals which are out of phase with each other.

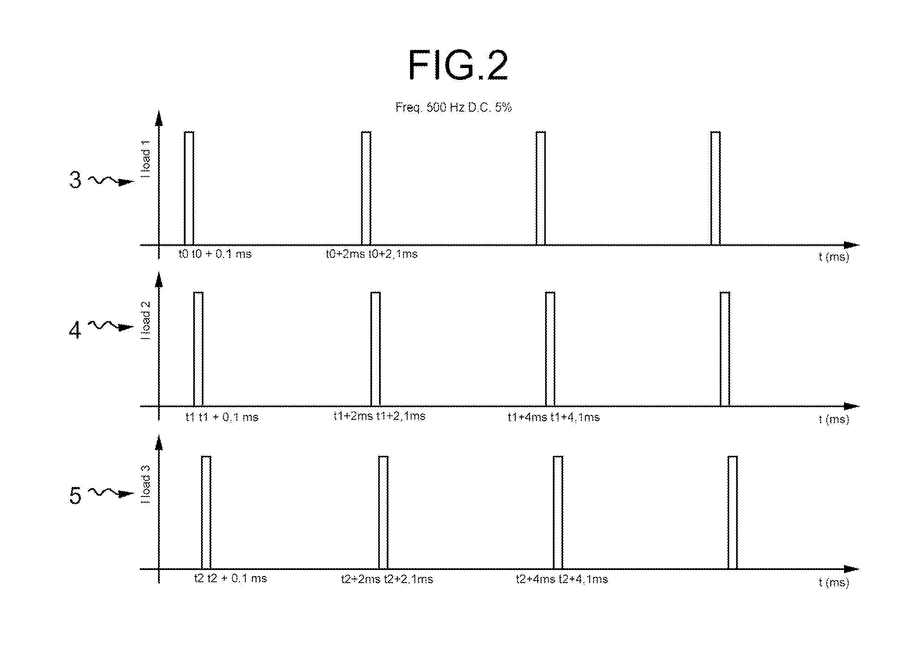

Figure 2 shows three diagrams, namely a third diagram 3, a fourth diagram 4, and a fifth diagram 5, which show the phase-shifted variations of the current in three different loads. In the third diagram, the variation of the current as a function of time takes the form of a square wave which starts at the instant to and ends at the instant t₀+0.1 ms. In the fourth diagram, the current variation takes the form of a square wave which starts at the instant t₁ and ends at the instant t₁+0.1 ms, where the instant t₁ follows the instant t₀+0.1 ms of the third diagram. In the fifth diagram, the current variation takes the form of a square wave which starts at the instant t₂ and ends at the instant t₂+0.1 ms, where the instant t₂ follows the instant t₁+0.1 ms of the fourth diagram.

The diagnosis in such a control system for the external lighting of the vehicle can be carried out in current mode, in voltage mode, or in both modes.

In the case of current diagnosis, the current flowing in the load is measured, and, given that it must be equal to a predetermined value, a signal is emitted if the measured current is different from this value, with allowance for a predetermined tolerance.

In the case of voltage diagnosis, the voltage across the terminals of the load is measured, and, given that it should have predetermined values, any deviations are signalled.

The said signals indicate a possible anomaly or malfunction.

However, the diagnosis described above must be carried out during periods in which the load is driven, in other words, for current diagnosis, in the time interval in which the square wave representing the current (see Figures 1 and 2) has the high value. The acquisition of the current measurement in the load must therefore be synchronized with the driving of the load, which, as has been stated, is phase shifted between the loads. This synchronizing operation makes the processing time-consuming, especially when the number of loads to be monitored is high. The need to introduce the phase shift and the use of high driving frequencies, combined with short duty cycles, makes the task described above even more complicated.

Assuming a duty cycle of 5% and an operating frequency of 500 Hz, the pulses to be sampled will have a width of 10 µs. Consequently, the requirements in terms of computing performance (speed, reaction time and accuracy) become very onerous.

The object of the present invention is to propose a diagnostic system for the external lighting devices of the vehicle which can be used to provide a more effective and efficient diagnosis of the correctness of the operation of the lighting devices where a pulse width modulation method is used for the supply of these devices.

In particular, one object of the invention is to eliminate the need for synchronization between driving and diagnosis in the load.

These and other objects are achieved with a diagnostic system whose principal features are defined in Claim 1.

Specific embodiments are described in the dependent claims.

Briefly, the invention consists in filtering the measurement of the current flowing through the load, by means of a low-pass frequency filter of suitable size. The output of the filter is therefore a constant signal equal to the mean value of the current flowing in the load, and takes account of the duty cycle. A processing unit is therefore provided to read the output signal from the filter for diagnostic purposes at any time, thus removing the constraint of synchronization with the driving of the load. This enables the performance requirements of the processing unit to be reduced.

Other characteristics and advantages of the invention will become clear from the following detailed description which is given purely by way of non-limiting example with reference to the attached drawings, in which:
- Figure 1 shows two exemplary diagrams of the variation of current in a load as a function of the duty cycle;
- Figure 2 shows three exemplary diagrams of the variation of current in a corresponding plurality of loads;
- Figure 3 is a schematic representation of a first embodiment of the diagnostic system according to the invention;
- Figure 4 is a schematic representation of a second embodiment of the diagnostic system; and
- Figure 5 is a schematic representation of a third embodiment of the diagnostic system.

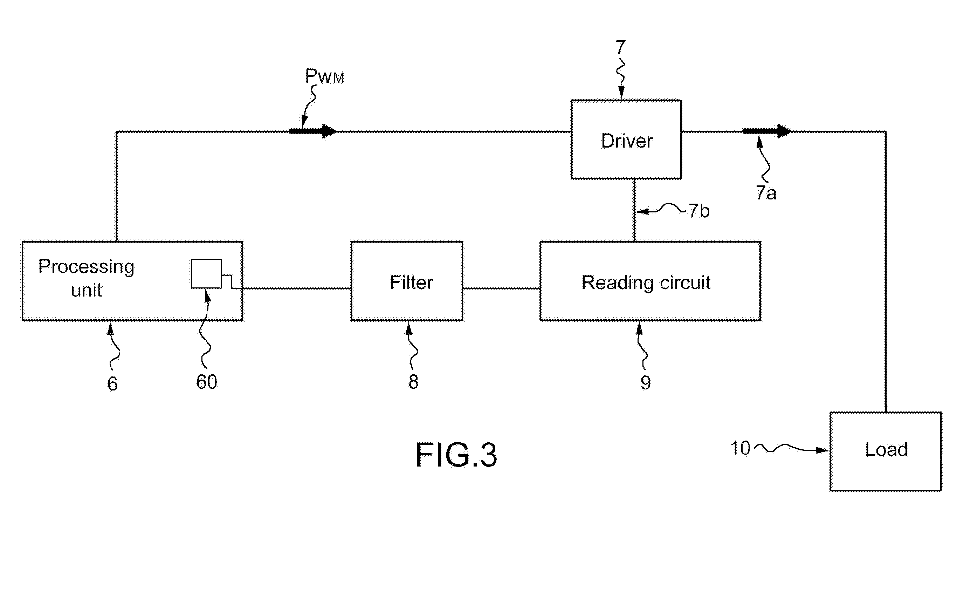

Figure 3 shows a block diagram of a first embodiment of the diagnostic system according to the invention.

This figure shows a data processing unit 6 designed to send a pulse width modulated driving signal PWM to a load driver 7. The load driver 7 is designed to send a load driving signal 7a, which is also pulse width modulated and dependent on the signal PWM sent by the processing unit 6, and which serves to operate a load 10. The load driver 7 is a device which, when operated by the low-power signal PWM, is arranged to connect a power source (battery) present on board the vehicle to the load 10, according to known configurations, since it would be difficult to operate the load 10 directly with the signal PWM because of problems of electrical incompatibility, such as insufficient power or unsuitable dynamics. The load driving signal 7a therefore represents the actual current which flows through the load, and will therefore be zero if the load is faulty (open circuit) or will always be equal to the maximum current if a destructive short circuit occurs.

The load driver 7 is also connected to a current reading circuit 9 for reading the current in the load, this circuit being designed to acquire a load signal 7b correlated with said load driving signal 7a, and to send it to a low-pass filter 8.

The output signal from said filter 8, which is determined by and proportional to the mean value of said load signal 7b, is sent to the processing unit 6. In particular, the output signal from the filter 8 is sent to a comparator module 60 which can compare the received signal with reference thresholds. If the output signal from the filter 8 is within the range between the said thresholds, this means that the load 10 is operational; otherwise, it means that there is an anomaly or malfunction, and the processing unit 6 will signal this to the user. The reference thresholds are determined by the expected value of the output signal from the filter 8; for example, they delimit a range equivalent to a tolerance of 30% on the said expected value.

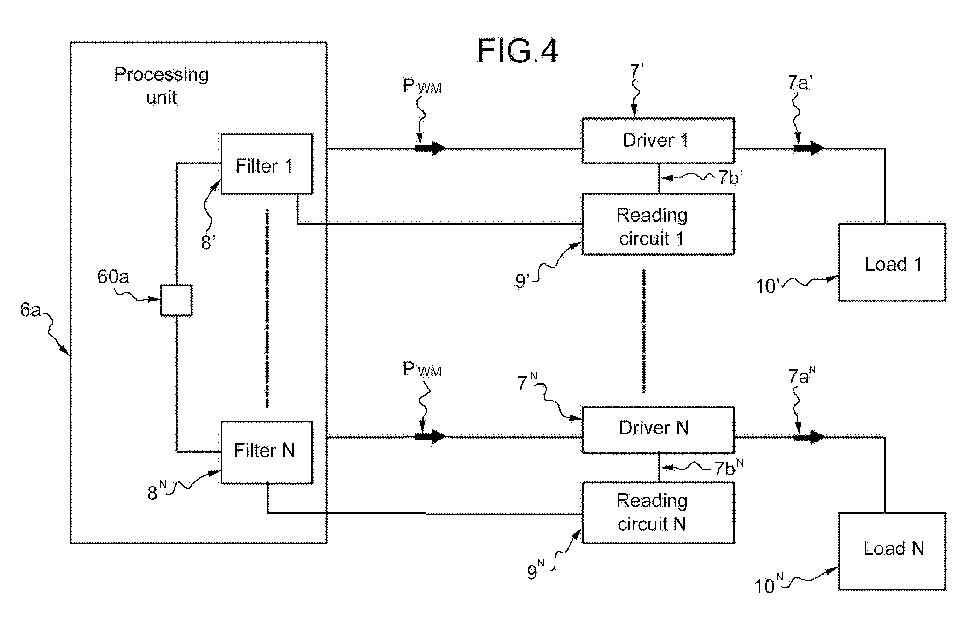

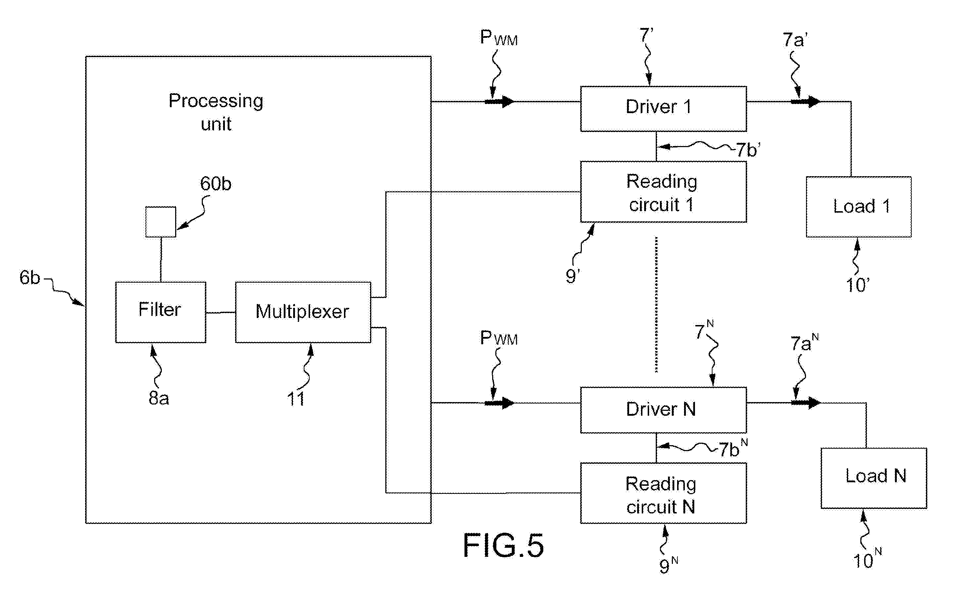

Figure 3 shows the case in which the filter 8 is a hardware filter, in other words one made in the form of a filtering analogue circuit device, but alternatively it is possible to use a digital filter, in other words one made in the form of a software or firmware module, as shown in Figures 4 and 5.

Figure 4 shows a processing unit 6a designed to send a plurality of signals PWM to corresponding load drivers 7',...,7^{N}, which operate corresponding loads 10',...,10^{N} by means of corresponding load driving signals 7a',...,7a^{N}. The said processing unit 6a contains a plurality of filter modules 8',...,8^{N} which can receive, in the way shown in Figure 3, corresponding load signals 7b',...,7b^{N}, correlated with the said load driving signals 7a',...,7a^{N}, from corresponding current reading circuits 9',...,9^{N} which are arranged to acquire the said load signals 7b',...,7b^{N} from the load drivers 7',...,7^{N}.

This configuration makes it possible to carry out the diagnosis even if the signal PWM is not generated by the data processing unit 6a, but directly by the load drivers 7',...,7^{N}, or by other signals which are present on the on-board card and are independent of the processing unit 6a. This is because there are drivers 7',...,7^{N} which can generate the signal PWM autonomously, on the basis of information on frequency and duty cycle supplied by the processing unit 6a. In this case, the processing unit 6a could not be synchronized with the signal PWM to carry out the diagnosis operation. There are also other systems in which two processing units 6a are present, one for sending the operating signal PWM and the other for reading the output signal from the filter and carrying out the diagnosis; in this case too, it would be very difficult to provide synchronization between the driving and reading operations.

A comparator module 60a compares the signals received from the filter modules 8',...,8^{N} with reference thresholds, in the way described with reference to Figure 3.

The described system can be modified further by reducing the requirements for computing resources by comparison with the processing unit 6a. This is because it is possible to exploit the periodicity of the signal acquired by the reading circuits 9',...,9^{N}, by filtering the signal concerned only in the time intervals in which the processing unit 6a is inactive, and/or to apply a single digital filter module to a plurality of current reading circuits 9',...,9^{N}, as shown in Figure 5.

This figure shows a processing unit 6b which contains a single digital filter 8a, which is connected to a multiplexer 11. The said multiplexer 11 is arranged to connect the reading circuits 9',...,9^{N} to the filter 8a in successive instants of time. Thus it is possible to use a single filter 8a, arranged to analyse the signals relating to the different loads 10',...,10^{N}, as described above, in different time intervals.

A comparator module 60b compares the signals received from the filter 8a with reference thresholds, in the way described with reference to Figures 3 and 4.

For example, assuming that the requests for diagnosis are made at regular time intervals of about one second, and assuming that each load observation period is 50 ms, the filter will cope for a period of 50 ms with the channel relating to the first load, for a subsequent time interval of 50 ms with the channel relating to the second load, and so on, up to the exhaustion of all the available time after which the results of the diagnosis have to be communicated.

Clearly, as will be obvious to a person skilled in the art, the above description relating to current measurements can be extended, in dual mode, to voltage measurements, simply by providing a voltage reading circuit in place of the current reading circuit.

With reference to Figures 3, 4 and 5, it should be noted that, since the filter 8, 8',...,8^{N}, 8a has to carry out sampling with a very high frequency of repetition, problems may occur when the samplings has to be carried out at moments in which the processing unit 6, 6a, 6b should cope with executing other operations.

This is because the processing unit 6, 6a, 6b, in its ordinary functioning, executes many operations in addition to the diagnostic operation on the loads 10, 10',...,10^{N}. An operating system on board the vehicle is arranged to sequence these operations and check that they are repeated periodically after each predetermined time interval, called the "tick" of the system. The operations other than diagnosis therefore occupy the processing unit 6, 6a, 6b for a period in which it cannot be used. To overcome this problem, since the time intervals in which the load driving signal can be sampled for diagnostic purposes are periodic, the sampling takes place only when the processing unit 6, 6a, 6b does not have to execute other operations.

Since the diagnostic operations have to be executed many times, the components used must be fast.

In the system according to the invention it is possible, for example, to use different types of digital filter, such as a FIR (Finite Impulsive Response) filter or an IIR (Infinite Impulsive Response) filter. The FIR filter requires from 50 to 100 samples, while the IIR filter only requires 4 or 5, depending on the order of the filter, and therefore occupies far fewer resources than the FIR filter for the same performance.

Clearly, the principle of the invention remaining the same, the embodiments and the details of construction can be varied widely from what has been described and illustrated purely by way of non - limiting example, departing from the scope of protection of the invention as defined in the attached claims.

## Claims

1. Diagnostic system for the external lighting devices of a vehicle, comprising:
- at least one reading circuit (9, 9', ..., 9^{N}), associated with at least one load driver (7, 7', ..., 7^{N}) which is arranged to send a pulse width modulated load driving signal (7a, 7a', ..., 7a^{N}) for operating at least one load in the form of an external lighting device (10, 10', 10^{N}), the said reading circuit (9, 9', ..., 9^{N}) being adapted of acquiring a load signal (7b, 7b', ..., 7b^{N}) correlated with the said load driving circuit (7a, 7a', ..., 7a^{N});
the system being **characterized in that** it also comprises:
filtering means (8, 8', ..., 8^{N}, 8a) arranged to receive the said load signal (7b, 7b', ..., 7b^{N}) from the said at least one reading circuit (9, 9', ..., 9^{N}) and to send at least one output signal related proportionally to the mean value of the said load signal (7b, 7b', ..., 7b^{N}), and
processing means (6, 6a, 6b) comprising at least one comparator module (60, 60a, 60b) which can compare the said at least one output signal with at least one reference threshold, and which is arranged to supply a diagnostic result in accordance with the outcome of the said comparison.

2. Diagnostic system according to Claim 1, in which the said reference threshold is a range lying between two reference values.

3. Diagnostic system according to Claim 1 or 2, in which the said processing means (6, 6a, 6b) comprise a low-pass filter (8, 8', ...,8^{N}, 8a).

4. Diagnostic system according to any one of the preceding claims, comprising a multiplexer device (11) for connecting a plurality of reading circuits (9, 9', ..., 9^{N}) associated with a plurality of load drivers (7, 7', ..., 7^{N}) to the said filtering means (8, 8', ..., 8^{N}, 8a) in successive instants of time.

5. Diagnostic system according to any one of the preceding claims, in which the filtering means (8, 8', ..., 8^{N}, 8a) comprise at least one analogue filter.

6. Diagnostic system according to any one of the preceding claims, in which the filtering means (8, 8', ..., 8^{N}, 8a) comprise at least one FIR digital filter.

7. Diagnostic system according to any one of the preceding claims, in which the filtering means (8, 8', ..., 8^{N}, 8a) comprise at least one IIR digital filter.

8. Diagnostic system according to any one of the preceding claims, in which the load signal (7b, 7b', ..., 7b^{N}) is a current signal.

9. Diagnostic system according to any one of the preceding claims, in which the load signal (7b, 7b', ..., 7b^{N}) is a voltage signal.
